# EUROPÄISCHE PATENTSCHRIFT

(11) **EP 1 695 609 B1**
(45) Veröffentlichungstag und Bekanntmachung des Hinweises auf die Patenterteilung: **11.06.2008**
(21) Anmeldenummer: 05004186.2
(22) Anmeldetag: 25.02.2005
(51) Int. Cl.: A01D 34/69

(54) **Rasenmäher**
Lawn mower
Tondeuse à gazon

(43) Veröffentlichungstag der Anmeldung: 30.08.2006
(73) Patentinhaber: OUTILS WOLF, 67165 Wissembourg Cedex (FR)
(72) Erfinder: Sturm, Robert, 67660 Betschdorf (FR); Bour, Daniel, 57415 Enchenberg (FR)
(74) Vertreter: Brommer, Hans Joachim

(56) Entgegenhaltungen:
- WO-A-02/102644
- US-A- 4 920 733
- US-A- 4 967 543
- US-A- 5 305 588
- US-A1- 2001 042 653

## Beschreibung

Die Erfindung betrifft einen handgeführten Rasenmäher mit zumindest einem unter einem haubenähnlichen Gehäuse horizontal umlaufenden Schneidmesser, das von einem Motor angetrieben wird, der auf dem haubenähnlichen Gehäuse montiert ist, wobei der Motor außerdem mit einer Hydraulikpumpe verbunden ist, die über einen Hydraulik-Kreislauf die an dem Gehäuse höhenverstellbar gelagerten Vorder- und/oder Hinterräder antreibt, wobei jedes Vorder- oder Hinterrad einen eigenen Hydraulikmotor aufweist.

Hydraulische Fahrantriebe sind bei handgeführten Rasenmähern in der Form bekannt, dass der Benzin- oder Elektromotor des Schneidmessers zugleich auch eine Hydraulikpumpe antreibt. Diese steht ihrerseits mit einem Hydraulikmotor in Verbindung, der auf der Hinterradwelle des Rasenmähers angeordnet ist.

Zum Kurven Fahren des Rasenmähers ist es erforderlich, dass die beiden angetriebenen Räder jeweils über Freiläufe mit der Antriebswelle verbunden sind. Dadurch kann das kurvenäußere Rad schneller gedreht werden als das kurveninnere Rad. Allerdings bedarf es dazu eines erheblichen Kraftaufwandes seitens der Bedienungsperson, weil der Rasenmäher an der kurvenäußeren Seite beschleunigt werden muss.

Außerdem haben diese Freiläufe den Nachteil, dass der Mäher bei Bergabfahrt bestrebt ist, davonzufahren. Die Bedienungsperson muss den Mäher also zurückhalten und dabei vorwärts laufen, was ergonomisch unangenehm ist.

Ein derartiger Rasenmäher ist aus der US 5,305,588 bekannt. Dort ist oberhalb eines Mähergehäuses ein Antriebsmotor angeordnet, der über zwei Hydraulikpumpen jeweils einen Hydraulikmotor an den Hinterrädern des Mähers antreibt. Die Hydraulikpumpen sind entfernt vom Mähergehäuse im Bereich zwischen den Hinterrädern angeordnet.

Aus der WO 02/102 644 ist ein Aufsitzmäher bekannt, dessen Antriebssystem eine Hydraulikpumpe aufweist, an die zwei parallel geschaltete Hydraulikmotoren angeschlossen sind. Die Hydraulikpumpe ist zwischen den Hinterrädern im Bereich des Fahrgestells des Mähers montiert.

Hiervon ausgehend liegt der vorliegenden Erfindung die Aufgabe zugrunde, ein Bodenbearbeitungsgerät, insbesondere einen hinsichtlich seiner Manövrierbarkeit verbesserten handgeführten Rasenmäher anzugeben sich durch einen funktionellen und kostengünstigen Aufbau auszeichnet und einfach herstellbar und zu warten ist.

Diese Aufgabe wird erfindungsgemäß dadurch gelöst, dass die Hydraulikmotoren in Parallelschaltung an die genannte Hydraulikpumpe angeschlossen sind und dass die Hydraulikpumpe zumindest teilweise, vorzugsweise zumindest mit ihrem die Anschlüsse für die Hydraulikleitungen aufweisenden Pumpenteil an der Oberseite des haubenförmigen Gehäuses oder an dem Motor angeordnet ist.

Dadurch, dass jedem Rad sein eigener Hydraulikmotor zugeordnet ist, entfällt die gemeinsame Antriebswelle und es ergibt sich ein Differentialeffekt zwischen beiden Rädern in der Weise, dass eine niedrigere Drehzahl des einen Rades automatisch zu einer höheren Drehzahl des anderen Rades führt. Die Bedienungsperson braucht also keinen zusätzlichen Kraftaufwand, um den Rasenmäher auf der Kurvenaußenseite zu beschleunigen. Das Kurven Fahren wird dadurch für den Benutzer bedeutend bequemer.

Des Weiteren hat der Wegfall der durchgehenden Hinterradwelle den Vorteil, dass man dort Platz gewinnt, so dass der Auswurfkanal für das Schnittgut mit freien Querschnitt ohne durchquerende Teile ausgebildet werden kann und dass er tiefer gelegt werden kann. Die Auswurffunktion des Mähers wird dadurch deutlich verbessert, insbesondere die Verstopfungsgefahr beseitigt.

Ein anderer vorteilhafter Aspekt der Erfindung besteht darin, dass die Hydraulikpumpe oberhalb des haubenförmigen Gehäuses, sei es direkt oder indirekt am Gehäuse selbst oder am Motor positioniert ist. Dadurch können die Hydraulikleitungen zumindest überwiegend oberhalb des Rasenmäher-Gehäuses verlegt werden und Durchtrittsöffnungen durch das Gehäuse für die Hydraulikleitungen erübrigen sich. Dies erleichtert nicht nur die Herstellung des Rasenmähers, sondern auch die spätere Wartung.

Zweckmäßig ist die Pumpe in Fahrtrichtung etwa hinter dem Motor auf dem Rasenmähergehäuse montiert. Sie kann ebenso aber auch an dem Benzin- oder Elektromotor angebaut oder eingebaut sein.

Erfolgt der Pumpen-Antrieb über einen Riemen, so empfiehlt es sich, ihn allseits abzudecken, damit sich kein Schnittgut, Erde etc. ansetzen kann. Dies erfolgt einerseits durch das Gehäuse, andererseits durch eine passende Abdeckung.

Des Weiteren empfiehlt es sich hinsichtlich der Pumpe, dass sie reversibel ausgestaltet ist, das heißt, dass sie das Hydraulikmittel wahlweise in Gegenrichtung fördern kann. Dadurch ist es möglich, die Hydraulikmotoren an den angetriebenen Rädern in Gegenrichtung zu beaufschlagen, den Rasenmäher also rückwärts anzutreiben.

Eine andere zweckmäßige Weiterbildung der Erfindung besteht darin, dass die Hydraulikleitungen zu den Hydraulikmotoren an eine gemeinsame Verteilvorrichtung angeschlossen sind zur gegebenenfalls unterschiedlich großen Zuteilung der Hydraulikmittelmengen auf das linke und rechte Antriebsrad. Dadurch ist sichergestellt, dass ein verringerter Zufluss auf das eine Antriebsrad zu einer gleich starken Erhöhung des Zuflusses zum anderen Antriebsrad führt. Es ergibt sich also bei Kurvenfahrt ein automatischer Ausgleich der unterschiedlichen Rad-Drehzahlen.

Besonders günstig ist es dabei, wenn diese Verteilvorrichtung vom Benutzer des Gerätes verstellt werden kann. Beispielsweise kann es in sehr rutschigem Gelände zweckmäßig sein, die Differentialwirkung zu drosseln oder ganz auszuschalten, damit zwangsweise beide Räder angetrieben bleiben. Dazu kann der Benutzer die Verteilvorrichtung in eine Blockierstellung im Sinne eines Sperr-Differentials verstellen.

Es sind aber auch Zwischenstellungen der Verteilvorrichtung möglich im Sinne einer nur teilweisen Differentialsperre.

Die Verteilvorrichtung kann grundsätzlich an beliebiger Stelle positioniert werden. Im Sinne eines kompakten Aufbaues empfiehlt es sich, sie direkt in die Hydraulikpumpe einzubauen.

Weitere Merkmale und Vorteile der Erfindung ergeben sich aus der nachfolgenden Beschreibung eines Ausführungsbeispieles und aus der Zeichnung; dabei zeigt
- Figur 1: eine Schrägansicht eines Rasenmähers von hinten bei abgenommenem Führungsbügel;
- Figur 2: einen schematischen Vertikalschnitt für den Antrieb der Hydraulikpumpe;
- Figur 3: eine schematische Ansicht von unten;
- Figur 4: den Hydraulik-Kreislauf;
- Figur 5: die Verbindung zwischen Hydraulikmotor und angetriebenem Rad;
- Figur 6: einen Schnitt durch die Verteileinrichtung;
- Figur 7: den By-Pass-Schalter in schematischer Darstellung;
- Figur 8: den By-Pass-Schalter in der Antriebsstellung;
- Figur 9: den By-Pass-Schalter in der Freigabe-Stellung.

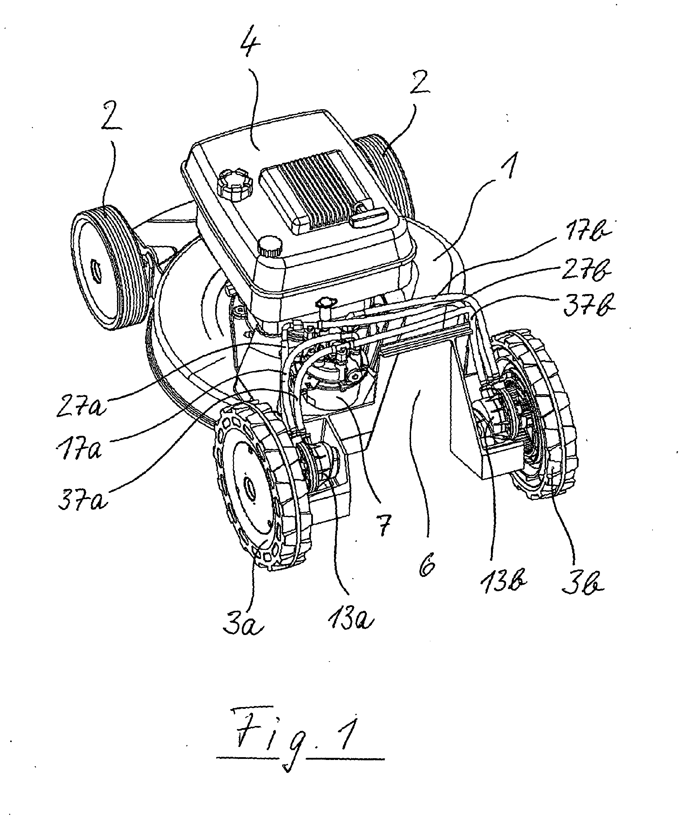

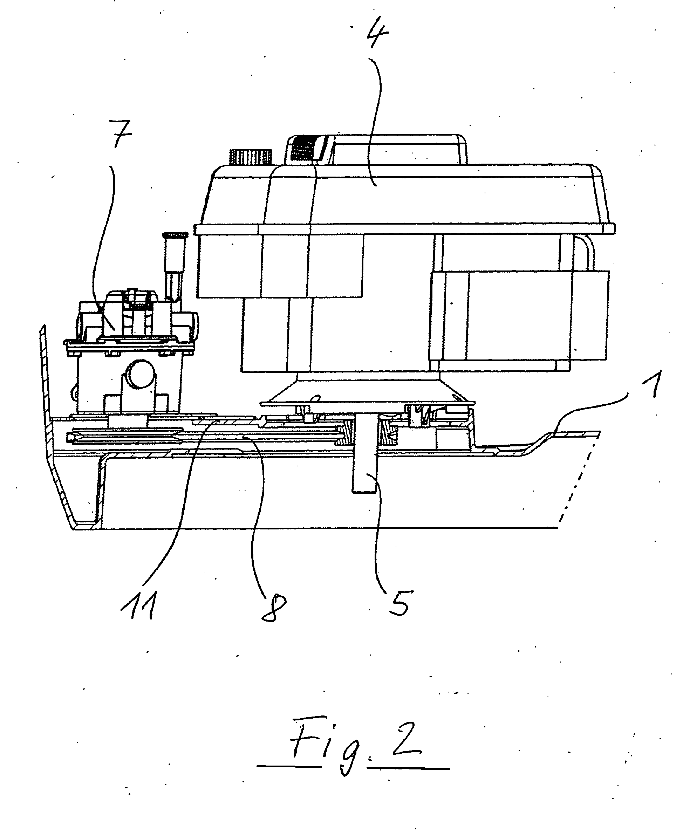

Der in Figur 1 abgebildete Rasenmäher besteht aus einem haubenförmigen Gehäuse 1, an dem zwei frei laufende Vorderräder 2 und zwei angetriebene Hinterräder 3 gelagert sind. An der Oberseite des Gehäuses 1 ist in an sich bekannter Weise ein Antriebsmotor 4 angeflanscht, im Ausführungsbeispiel in Form eines Benzinmotors. Er treibt über eine nach unten ragende zentrale Welle 5 (vergleiche Figur 2) ein nicht dargestelltes Schneidmesser, das unterhalb des Gehäuses 1 rotiert und das Schnittgut durch einen tangential nach hinten laufenden Auswurfkanal 6 des Gehäuses auswirft. Die Bedienung des Rasenmähers erfolgt über einen schräg nach hinten laufenden, nicht dafgestellten Führungsbügel. Insoweit hat der Rasenmäher weitgehend den bekannten Aufbau.

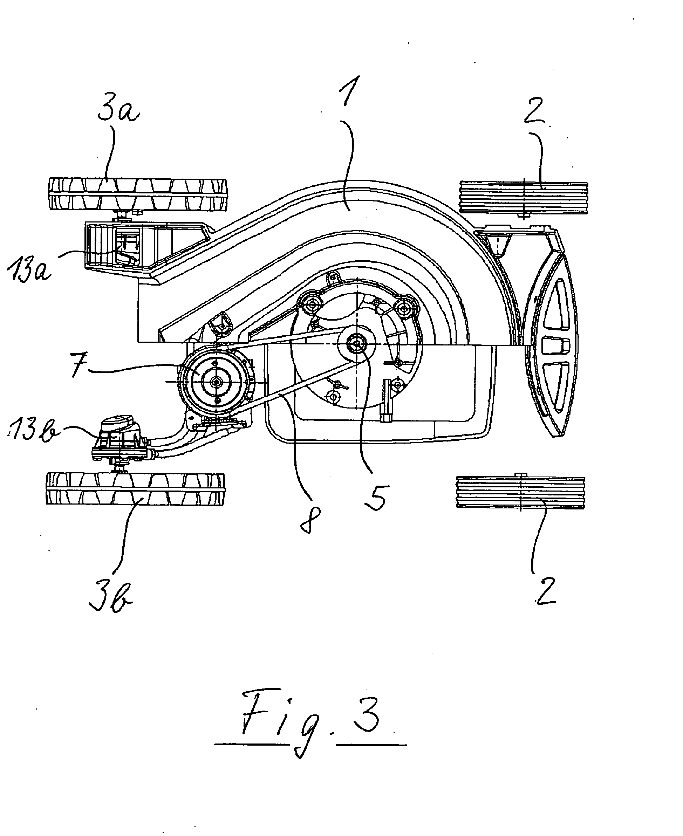

Wesentlich ist nun der hydraulische Antrieb der Hinterräder, indem jedes Hinterrad 3a und 3b mit einem eigenen Hydraulikmotor 13a bzw. 13b verbunden ist und beide Hydraulikmotoren an eine gemeinsame Hydraulikpumpe 7 angeschlossen ist. Die Hydraulikpumpe 7 ist über eine Abdeckung 11 an der Oberseite des Gehäuses 1 montiert und wird - wie die Figuren 2 und 3 zeigen - von der Welle 5 des Antriebsmotors 4 angetrieben, im Ausführungsbeispiel mittels eines Keilriemens 8, der unter der zweckmäßig am Gehäuse 1 montierten Abdeckung 11 angeordnet ist, sei es oberhalb des Gehäuses wie abgebildet, sei unterhalb des Gehäuses. Zur Regulierung der Riemenspannung ist die Hydraulikpumpe verstellbar am Gehäuse 1 gelagert.

Die Hydraulikpumpe 7 ist über jeweils eine Vorlaufleitung 17a und 17b, jeweils eine Rücklaufleitung 27a, 27b und jeweils eine Überlaufleitung 37a, 37b mit den Hydraulikmotoren 13a bzw. 13b verbunden. Dabei werden die Vorlaufleitungen 17a und 17b individuell mit Druck beaufschlagt, haben also einen eigenen Anschluss an die Hydraulikpumpe, wogegen die beiden Rücklaufleitungen wie auch die beiden Überlaufleitungen jeweils über einen gemeinsamen Anschluss an die Hydraulikpumpe angeschlossen sind.

Außerdem ist zu bemerken, dass die Vorlauf- und Rücklaufleitungen in ihrer Funktion reversibel sind: Bei Rückwärtsfahrt wird die Förderrichtung der Hydraulikpumpe 7 umgekehrt, so dass das Hydraulikmittel in die Rücklaufleitungen strömt und die Vorlaufleitungen als Rücklaufleitungen fungieren.

Zweckmäßig ist die Hydraulikpumpe mit allen Anschlussleitungen und mit den beiden Hydraulikmotoren zu einer vormontierten Baueinheit zusammengefasst. Dadurch kann das Einfüllen des Hydraulikmittels, das Entlüften und die Dichtheitsprüfung unabhängig von der sonstigen Montage des Rasenmähers erfolgen, was fertigungstechnische Vorteile hat.

Die genannten Hydraulikleitungen können aus flexiblem Material bestehen, um die Montage zu erleichtern und um die Höhenverstellung der Räder relativ zum Gehäuse nicht zu behindern. Die Höhenverstellung erfolgt aber zweckmäßig in der Form, dass die Hydraulikmotoren ortsfest bleiben und nur die Räder um das jeweilige Antriebsritzel des Hydraulikmotors schwenken.

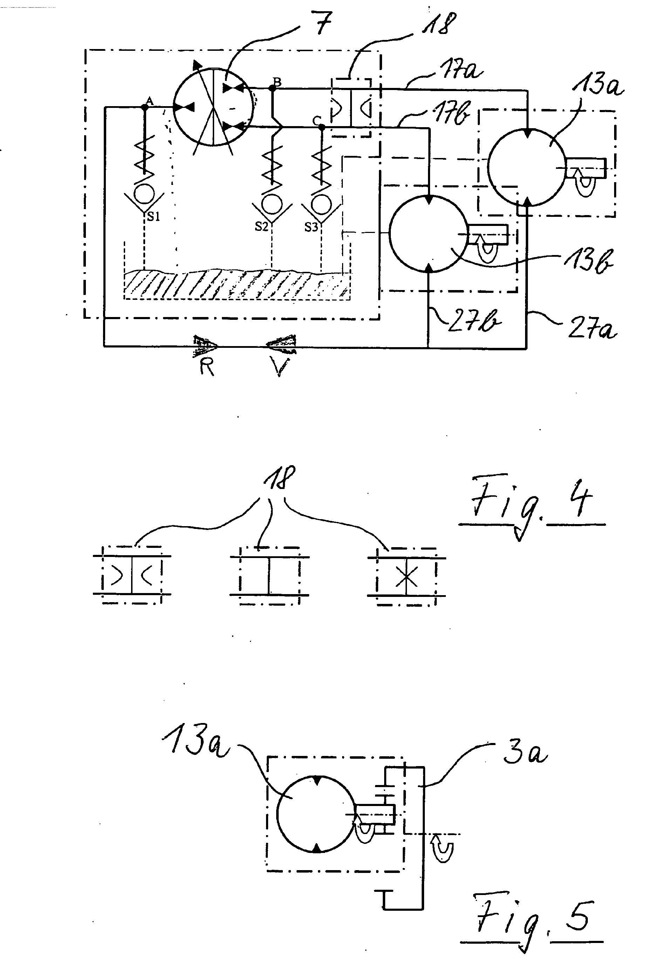

Figur 4 zeigt den zugehörigen Hydraulik-Kreislauf. Man erkennt dort, dass zwischen den beiden Vorlaufleitungen 17a und 17b eine Verteilvorrichtung 18 angeordnet ist. Diese Verteilvorrichtung bildet eine drosselbare Strömungsverbindung zwischen den beiden Vorlaufleitungen. Sie ist extern von außen verstellbar und gestattet entweder einen freien oder gedrosselten Durchfluss mit der Folge, dass beim Kurven Fahren der eine Hydraulikmotor mit einer größeren Menge Hydraulikmittel beaufschlagt werden kann als der andere. Außerdem kann die Verteilvorrichtung in eine Blockierstellung verschoben werden, so dass kein Durchfluss möglich ist. Sie fungiert dann als Differentialsperre.

Die drei Schaltungszustände der Verteilvorrichtung sind im unteren Teil von Figur 4 schematisch angedeutet.

Figur 5 zeigt die Verbindung zwischen Hydraulikmotor 18a und Antriebsrad 3a. Man sieht, dass der ortsfest am Gehäuse 1 montierte Hydraulikmotor 13a über ein Zahnrad mit einer Innenverzahnung des Antriebsrades 3a in Eingriff steht. Die Achse des Hydraulikmotors 18a fungiert zugleich als Schwenkachse für das Antriebsrad 3a, wenn dieses in der Höhe verstellt werden soll.

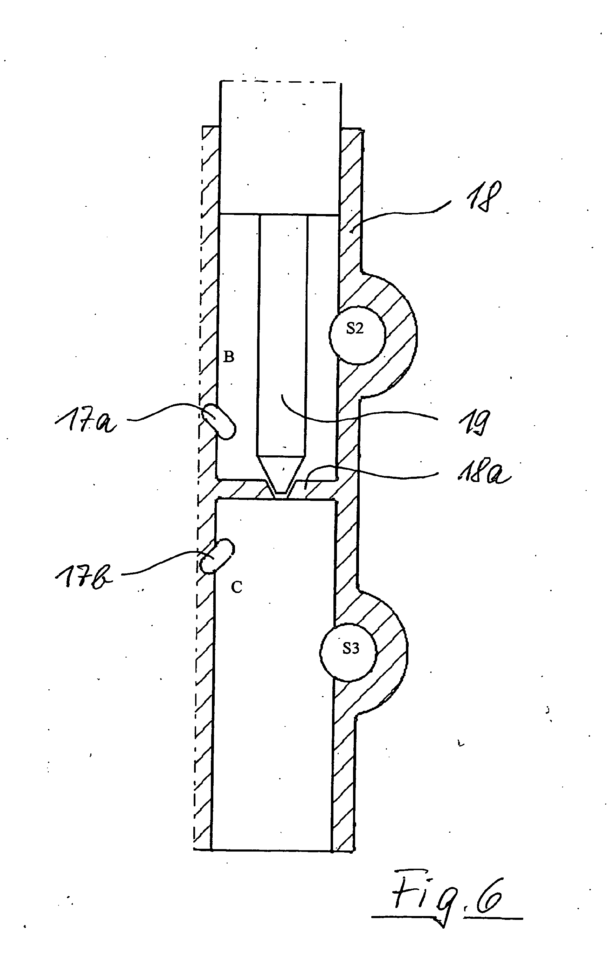

Figur 6 zeigt einen Längsschnitt durch die Verteilvorrichtung 18. Sie besteht aus einem zylindrischen Leitungsstück in welches die Vorlaufleitungen 17a und 17b münden. Die Mündungsbereiche sind durch eine Trennwand 18a mit einer zentralen Öffnung mehr oder weniger voneinander getrennt, je nachdem, wie weit diese zentrale Öffnung durch den extern verstellbaren Schieber 19 verschlossen wird.

Alternativ liegt es auch im Rahmen der Erfindung, mit einem automatischen Stromverteiler zu arbeiten, der bei erhöhtem Fahrwiderstand auf einer Seite dort automatisch die Ölzufuhr erhöht.

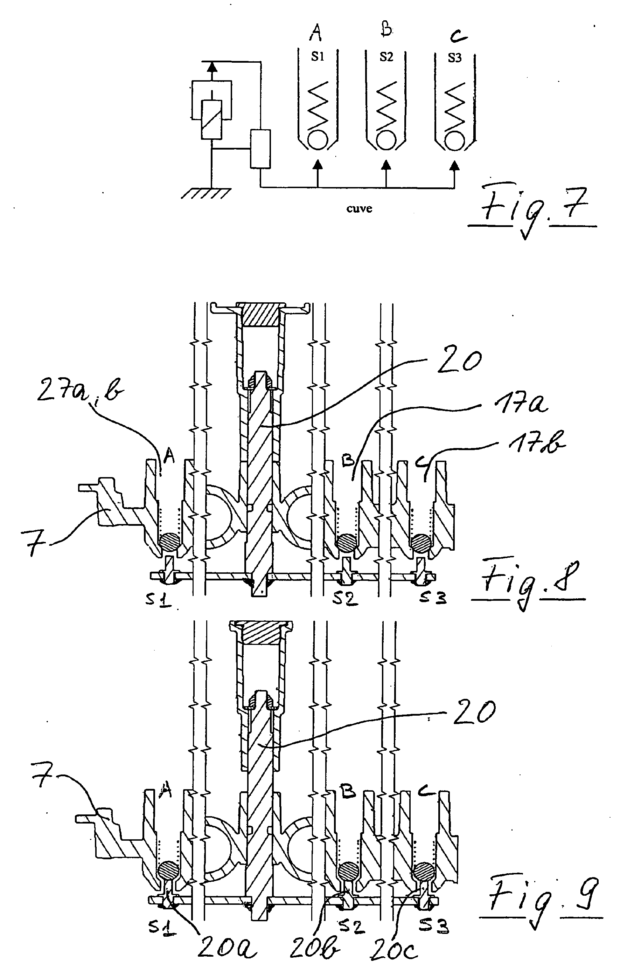

Die Figuren 7 bis 9 zeigen schematisch die By-Pass-Funktion, die notwendig ist, um den Rasenmäher bei Motor-Stillstand verfahren zu können. Dazu wird die Hydraulikpumpe, die an sich beim Stillstand einen Durchfluss blockiert, umgangen, indem die By-Pass-Ventile S1, S2 und S3 aus ihrer Geschlossenstellung herausgedrückt werden. Dieses Herausdrücken erfolgt manuell oder motorisch über ein Stellglied 20, das gleichzeitig auf alle drei By-Pass-Ventile S1, S2 und S3 einwirkt. Wie Figur 8 zeigt, hat es dazu kleine Vorsprünge 20a, 20b, 20c, welche die Ventilkörper aus ihrer Geschlossenstellung gemäß Figur 8 in die Offenstellung gemäß Figur 9 verschieben können. In der letztgenannten Offenstellung wird die Hydraulikpumpe quasi kurzgeschlossen, die Hydraulikmotore werden frei drehbar und der Mäher kann trotz Stillstandes der Hydraulikpumpe verfahren werden. Die By-Pass-Funktion kann aber auch auf andere Weise realisiert werden.

Im Ausführungsbeispiel erfolgt der Hydraulikantrieb nur auf die Hinterräder; stattdessen könnten selbstverständlich alle 4 Räder angetrieben werden.

Bei der Hydraulikpumpe handelt es sich um eine an sich bekannte Hubkolben-Pumpe, bei der eine Vielzahl parallel zueinander angeordneter Kolben in einem gemeinsamen Gehäuse über einer schräg angestellten Steuerscheibe rotieren. Die Richtung und Neigung dieser Steuerscheibe ist maßgebend für die Förderrichtung und die Fördermenge. Auf eine detaillierte Beschreibung wird verzichtet, da solche Pumpen bei Hydraulikantrieben bekannt sind.

Zusammenfassend besteht der Vorteil der Erfindung darin, dass der hydraulische Antrieb mit individuellen Hydraulikmotoren an jedem Antriebsrad die Manövrierbarkeit des Rasenmähers sehr erleichtert und dass die Position der Hydraulikpumpe oberhalb des Rasenmäher-Gehäuses die Montage und Wartung vereinfacht und dass der Gras-Auswurf verbessert wird.

## Patentansprüche

1. Handgeführter Rasenmäher mit zumindest einem unter einem haubenähnlichen Gehäuse (1) horizontal umlaufenden Schneidmesser, das von einem Motor (4) angetrieben wird, der auf dem haubenähnlichen Gehäuse (1) montiert ist, wobei der Motor (4) außerdem mit einer Hydraulikpumpe (7) verbunden ist, die über einen Hydraulik-Kreislauf die an dem Gehäuse höhenverstellbar gelagerten Vorder- und/oder Hinterräder antreibt, wobei jedes Vorder- und/oder Hinterrad (2; 3a, 3b) einen eigenen Hydraulikmotor (13a, 13b) aufweist,
**dadurch gekennzeichnet,**
**dass** die Hydraulikmotoren (13a, 13b) in Parallelschaltung an die genannte Hydraulikpumpe (7) angeschlossen sind und dass die Hydraulikpumpe (7) zumindest teilweise, vorzugsweise zumindest mit ihrem die Anschlüsse für die Hydraulikleitungen (17a, b, 27a, b, 37a, b) aufweisenden Pumpenteil an der Oberseite des haubenförmigen Gehäuses (1) oder an dem Motor (4) angeordnet ist.

2. Rasenmäher nach Anspruch 1,
**dadurch gekennzeichnet,**
**dass** die Hydraulikpumpe (7) in Fahrtrichtung hinter dem Motor (4) angeordnet ist.

3. Rasenmäher nach Anspruch 1,
**dadurch gekennzeichnet,**
**dass** die Hydraulikpumpe (7) bei Riemenantrieb relativ verstellbar zum Motor (4) gelagert ist.

4. Rasenmäher nach Anspruch 3,
**dadurch gekennzeichnet,**
**dass** der Riemenantrieb zwischen dem Gehäuse (1) und einer Abdeckung (11) verläuft.

5. Rasenmäher nach Anspruch 1,
**dadurch gekennzeichnet,**
**dass** die Hydraulikleitungen (17a, b, 27a, b, 37a, b) zumindest teilweise, vorzugsweise vollständig oberhalb des Rasenmähergehäuses (1) verlaufen.

6. Rasenmäher nach Anspruch 1,
**dadurch gekennzeichnet,**
**dass** die Hydraulikpumpe (7) hinsichtlich ihrer Förderrichtung reversibel ist.

7. Rasenmäher nach Anspruch 1,
**dadurch gekennzeichnet,**
**dass** der Hydraulik-Fahrantrieb auf die Hinterräder (3a, 3b) wirkt, dass die Hinterräder auf voneinander getrennten Achsen gelagert sind und zwischen den Hinterrädern (3a, 3b) ein Auswurfkanal (6) für Schnittgut verläuft.

8. Rasenmäher nach Anspruch 1,
**dadurch gekennzeichnet,**
**dass** die Hydraulikleitungen (17a, 17b) zu den Hydraulikmotoren (13a, 13b) an eine gemeinsame Verteilvorrichtung (18 angeschlossen sind zur gegebenenfalls unterschiedlich großen Zuteilung der Hydraulikmittelmengen auf das linke und rechte Antriebsrad (3a, 3b).

9. Rasenmäher nach Anspruch 8,
**dadurch gekennzeichnet,**
**dass** die Verteilvorrichtung (18) vom Benutzer des Gerätes verstellbar ist.

10. Rasenmäher nach Anspruch 8,
**dadurch gekennzeichnet,**
**dass** die Verteilvorrichtung (18) in eine Drossel- oder Blockierstellung im Sinne einer teilweisen oder vollständigen Differential-Sperre verstellbar ist.

11. Rasenmäher nach Anspruch 8,
**dadurch gekennzeichnet,**
**dass** die Verteilvorrichtung (18) in die Hydraulikpumpe (7) eingebaut ist.

12. Rasenmäher nach Anspruch 1,
**dadurch gekennzeichnet,**
**dass** der Hydraulikmotor (7) mit ihren Hydraulikleitungen (17a, b, 27a, b, 37a, b) und mit ihren Hydraulikmotoren (13a, 13b) eine vorgefertigte Baueinheit bilden.

13. Rasenmäher nach Anspruch 12,
**dadurch gekennzeichnet,**
**dass** die vorgefertigte Baueinheit vor dem Einbau in den Rasenmäher mit Hydraulikmittel gefüllt, entlüftet und auf Dichtheit geprüft ist.

## Claims

1. Hand-guided lawnmower having at least one cutting blade rotating horizontally under a hood-like housing (1), which cutting blade is driven by a motor (4) mounted on the hood-like housing (1), the motor (4) also being connected to a hydraulic pump (7) which by means of a hydraulic circuit drives the front and/or rear wheels which are height-adjustably mounted on the housing, each front and/or rear wheel (2; 3a, 3b) having its own hydraulic motor (13a, 13b),
**characterised in that**
the hydraulic motors (13a, 13b) are connected in parallel to the said hydraulic pump (7), and at least part of the hydraulic pump (7), preferably at least its pump part having the connections for the hydraulic lines (17a, b, 27a, b, 37a, b), is arranged on the upper side of the hood-shaped housing (1) or on the motor (4).

2. Lawnmower according to claim 1,
**characterised in that**
the hydraulic pump (7) is arranged behind the motor (4) in the direction of travel.

3. Lawnmower according to claim 1,
**characterised in that**
the hydraulic pump (7), in the case of a belt drive, is mounted so as to be adjustable relative to the motor (4).

4. Lawnmower according to claim 3,
**characterised in that**
the belt drive runs between the housing (1) and a cover (11).

5. Lawnmower according to claim 1,
**characterised in that**
the hydraulic lines (17a, b, 27a, b, 37a, b) run at least partly, preferably entirely, above the lawnmower housing (1).

6. Lawnmower according to claim 1,
**characterised in that**
the hydraulic pump (7) is reversible in respect of its feed direction.

7. Lawnmower according to claim 1,
**characterised in that**
the hydraulic drive means acts on the rear wheels (3a, 3b); the rear wheels are mounted on separate shafts, and an ejector channel (6) for cut material extends between the rear wheels (3a, 3b).

8. Lawnmower according to claim 1,
**characterised in that**
the hydraulic lines (17a, 17b) to the hydraulic motors (13a, 13b) are connected to a common distributor device (18) for allocating, where appropriate, different amounts of hydraulic medium to the left-hand and right-hand drive wheels (3a, 3b).

9. Lawnmower according to claim 8,
**characterised in that**
the distributor device (18) is adjustable by the user of the machine.

10. Lawnmower according to claim 8,
**characterised in that**
the distributor device (18) is adjustable into a throttle or blocking position in the sense of a partial or full differential lock.

11. Lawnmower according to claim 8,
**characterised in that**
the distributor device (18) is installed in the hydraulic pump (7).

12. Lawnmower according to claim 1,
**characterised in that**
the hydraulic motor (7) together with its hydraulic lines (17a, b, 27a, b, 37a, b) and its hydraulic motors (13a, 13b) forms a pre-assembled structural unit.

13. Lawnmower according to claim 12,
**characterised in that**
prior to installation in the lawnmower the pre-assembled structural unit has been filled with hydraulic medium, bled and tested for tightness.

## Revendications

1. Tondeuse à gazon guidée à la main dotée d'au moins une lame tournant horizontalement sous un carter (1) semblable à un capot, qui est entraînée par un moteur (4), qui est monté sur le carter (1) semblable à un capot, le moteur (4) étant relié en outre à une pompe hydraulique (7), qui - par le biais d'un circuit hydraulique - entraîne les roues avant et/ou arrière logées de manière réglable en hauteur au niveau du carter chaque roue avant et/ou arrière (2 ; 3a ; 3b) présentant un moteur hydraulique propre (13a, 13b),
**caractérisée en ce**
**que** les moteurs hydrauliques (13a, 13b) sont raccordés en parallèle à ladite pompe hydraulique (7) et en ce que la pompe hydraulique (7) est agencée au moins partiellement, de préférence au moins avec sa pompe présentant les raccords pour les conduites hydrauliques (17a, b, 27a, b, 37a, b), sur la face supérieure du carter (1) en forme de capot ou au moteur (4).

2. Tondeuse à gazon selon la revendication 1,
**caractérisée en ce**
**que** la pompe hydraulique (7) est agencée derrière le moteur (4) dans le sens de la marche.

3. Tondeuse à gazon selon la revendication 1,
**caractérisée en ce**
**que** la pompe hydraulique (7) est logée dans le cas d'un entraînement par courroie de manière relativement réglable par rapport au moteur (4).

4. Tondeuse à gazon selon la revendication 3,
**caractérisée en ce**
**que** l'entraînement par courroie s'étend entre le carter (1) et un recouvrement (11).

5. Tondeuse à gazon selon la revendication 1,
**caractérisée en ce**
**que** les conduites hydrauliques (17a, b, 27a, b, 37a, b) s'étendent au moins partiellement de préférence entièrement au-dessus du carter (1) de la tondeuse à gazon.

6. Tondeuse à gazon selon la revendication 1,
**caractérisée en ce**
**que** la pompe hydraulique (7) est réversible en ce qui concerne son sens de débit.

7. Tondeuse à gazon selon la revendication 1,
**caractérisée en ce**
**que** le système d'entraînement hydraulique agit sur les roues arrière (3a, 3b), en ce que les roues arrière sont logées sur des axes séparés l'un de l'autre et qu'un canal d'éjection (6) pour l'herbe coupée s'étend entre les roues arrière (3a, 3b).

8. Tondeuse à gazon selon la revendication 1,
**caractérisée en ce**
**que** les conduites hydrauliques (17a, 17b) allant aux moteurs hydrauliques (13a, 13b) sont raccordées à un dispositif de distribution (18) commun pour distribuer le cas échéant différentes quantités de fluide hydraulique sur la roue d'entraînement gauche et droite (3a, 3b).

9. Tondeuse à gazon selon la revendication 8,
**caractérisée en ce**
**que** le dispositif de distribution (18) peut être réglé par l'utilisateur de l'appareil.

10. Tondeuse à gazon selon la revendication 8,
**caractérisée en ce**
**que** le dispositif de distribution (18) peut être réglé dans une position d'étranglement ou de blocage dans l'esprit d'un blocage différentiel partiel ou complet.

11. Tondeuse à gazon selon la revendication 8,
**caractérisée en ce**
**que** le dispositif de distribution (18) est monté dans la pompe hydraulique (7).

12. Tondeuse à gazon selon la revendication 1,
**caractérisée en**
**que** le moteur hydraulique (7) forme avec ses conduites hydrauliques (17a, b, 27a, b, 37a, b) et avec ses moteurs hydrauliques (13a, 13b) une unité de construction préfabriquée.

13. Tondeuse à gazon selon la revendication 12,
**caractérisée en ce**
**que** l'unité de construction préfabriquée est remplie de fluide hydraulique, purgée et son étanchéité vérifiée avant le montage dans la tondeuse.
